# EUROPEAN PATENT APPLICATION

(11) **EP 4 019 475 A1**
(43) Date of publication of application: **29.06.2022**
(21) Application number: 20217140.1
(22) Date of filing: 23.12.2020
(51) Int. Cl.: C02F 1/461, C25B 1/04, C02F 103/02

(54) **APPARATUS AND METHOD FOR GENERATING AND DELIVERING MICROBUBBLES AND NANOBUBBLES OF HYDROGEN GAS, OXYGEN GAS AND OXYHYDROGEN GAS IN WATER**

(71) Applicant: Airxone Limited, D12 YW83 Dublin 12 (IE); Treelium SA, 6855 Stabio (CH)
(72) Inventor: HENNESSEY, Michael, Dublin 12, Dublin D12 YW83 (IE); RICCARDINO, Paolo Lorenzo, Torino (IT); TZANKOV, Alexandar Nikolov, Sofia (BG); DELTCHEV, Deyan Ivanov, Sofia (BG)
(74) Representative: White, Jonathan Patrick

(57) **Abstract**

The present invention relates to an apparatus and method for generating and delivering microbubbles and nanobubbles of hydrogen gas, oxygen gas and oxyhydrogen gas in water. The apparatus comprises an electrolysis assembly disposed in the apparatus comprising electrodes operable to generate the microbubbles and nanobubbles on surfaces thereof from water received at an inlet. The electrodes are disposed within an electrode housing such that water received at the inlet flows over the electrodes to displace the microbubbles and nanobubbles of hydrogen gas, oxygen gas and oxyhydrogen gas into the water flow, and the electrodes are arranged such that the direction of flow of water from the inlet and across surfaces of the electrodes within the electrode housing to the outlet is substantially planar. The provision of an electrode housing ensures that the electrodes are packed relatively densely together in the housing so that water flowing through the housing is forced to flow between and over the surfaces of the electrodes. This means that a more efficient apparatus is provided as water flow is directed between the electrodes thus breaking off more gas bubbles at the desired smaller size to saturate water flow at the outlet with more nanobubbles and microbubbles of hydrogen gas, oxygen gas and oxyhydrogen gas.

## Description

The present invention relates to an apparatus for generating and delivering microbubbles and nanobubbles of hydrogen gas, oxygen gas and oxyhydrogen gas in water.

Studies have demonstrated water containing dissolved hydrogen at a concentration of .5 ppm to 1.6 ppm (parts per million), can provide therapeutic effects to the human body, as a selective antioxidant, anti-inflammatory, anti-allergic, neuro-protective and increased cellular metabolism. Hydrogen is the smallest and lightest molecule in existence. It can penetrate biomembranes and diffuse into the cytosol, mitochondria and nucleus of cells neutralising free radicals. Other antioxidants such as Vitamin C or Vitamin E are much larger molecules and unable to penetrate the skin and are best delivered through the digestive tract. Therefore bathing or washing in or drinking hydrogen is a novel way to deliver the therapeutic benefits o of hydrogen to the body.

Furthermore, changes in the appearance of skin is a common visible sign of aging. Typical indications of aging skin include loss of elasticity and wrinkles and is often the result of exposure to reactive oxygen species (ROS) and reactive nitrogen species (RNS) that cause damage to cellular proteins, membranes and DNA. Exposure to environmental factors, such as ultraviolet light, ionizing radiation and pollutants typically cause high ROS concentrations in skin. Damage caused by free radicals (ROS/RNS) are from cellular respiration and environmental factors such as UV light, pollution, smoking and the like.

Cosmetic interventions, such as topical creams, are often attempted to improve skin appearance, however, the effects of these treatments are temporary and do little to improve skin structure and appearance unless they deliver antioxidants to skin tissue and prevent ROS/RNS damage.

Antioxidants may however be delivered to skin and bathing in water containing molecular hydrogen gas bubbles are known to reduce oxidative stress and excess amounts of ROS/RNS in body cells due to its mild but efficient antioxidant properties. Consequently, bathing in water containing molecular hydrogen gas bubbles is used for combating oxidative damage in skin and promoting a youthful appearance.

Over 90% of the oxygen that is inhaled into the body will be consumed by the cells mitochondria to produce energy. However, during the process of oxygen consumption reactive oxygen radicals are produced, in a process of oxidation. Oxidation reduction potential (ORP), also known as REDOX, is a measurement that reflects the ability of a molecule to oxidize or reduce another molecule. Oxidation is the loss of electrons, so oxidizers accept electrons from other molecules. Reduction is the gain of electrons, so reducers donate electrons to other molecules. Oxidation reduction potential is measured as a single voltage in millivolts (mV). Oxidizers have a positive ORP value, while reducers have a negative ORP value. Regular tap water will have an ORP in the range of +200 - +400. Carbonated drinks can be as high as +600, meaning they have a high oxidizing effect on the body. An orange has an ORP of approximately -150, green tea -200 and as such have good anti-oxidant properties.

For example, in one study [Kato, S., Saitoh, Y., Iwai, K. and Miwa, N. (2012) Hydrogen-Rich Electrolyzed Warm Water Represses Wrinkle Formation against UVA Ray Together with Type-1 Collagen Production and Oxidative Stress Dimishment in Fibroblasts and Cell-Injury Prevention in Keratinocytes. Journal of Photochemistry and Photobiology B, 106, 24-33.], subjects showed significant improvements in neck wrinkles after bathing daily for 3 months in in water containing molecular hydrogen bubbles (0.2 - 0.4 ppm H₂). This same study found that type-1 collagen synthesis was increased over 2-fold after 3 - 5 days in the H₂-enriched water samples compared to controls.

In a further study [Qinyuan Zhu, Yueshen Wu, Yongmei Li, Zihua Chen, Lanting Wang, Hao Xiong, Erhong Dai, Jianhua Wu, Bin Fan, Li Ping & Xiaoqun Luo] (published in 2018) titled, "Positive effects of hydrogen-water bathing in patients of psoriasis and parapsoriasis en plaques". 75 patients with Psoriasis were assessed as to the severity of their skin condition based on the Psoriasis Area Severity Index (PASI) score and Visual Analog Scale (VAS). 41 psoriasis patients were assigned to treatment with hydrogen-water bathing therapy and 34 patients were assigned to the control group bathing in regular tap water. Hydrogen-water bathing was administrated through the skin by immersing the whole body in the hydrogen-water twice a week (interval of 3 days). Each bathing took 10 to 15 minutes. The dissolved hydrogen in the water had a concentration of 1.0ppm (part per million) (for reference, the dissolved hydrogen of tap-water is less than 0.001 ppm) and with an extremely negative oxidation reduction potential (ORP) of -580 mV- -650 mV (for reference, tap water: +250 mV∼ +350 mV). After 8 weeks of therapy, patients treated with hydrogen-water bathing showed significantly greater improvement than those who were in the control group as evaluated by both PASI and VAS scores. Patients with psoriasis and parapsoriasis en plaques who were treated with hydrogen-water bathing therapy achieved significant and rapid improvement in disease severity and quality of life.

Devices for delivering molecular hydrogen in water typically use electrolysis assemblies in which oxygen, hydrogen and oxyhydrogen gas produced at the electrodes are dissipated into the surrounding water. However, these known methods suffer from drawbacks, including that the bubbles formed at the electrodes typically coalesce into larger micro and macro bubbles of gas which then break off from the electrodes, float to the top of the surface of the water and burst. The size of the bubbles produced is thus important as the larger they are the quicker they float to the surface and burst. Microbubbles having a dimension under 100 microns on the other hand will rise more slowly and implode in the water. Nanobubbles will remain in the water for a prolonged period of time.

The size of the gas bubbles produced is thus important as the smaller they are the longer they remain in the water, thus the concentration of hydrogen in the water is greater and the oxidation reduction potential ORP of the water is thus greater and remains so for longer. This has significant advantages where one needs to generate a large hydrogen PPM concentration or ORP value in a water reservoir or in a water flow device (such as those used in a shower, drinking water system, irrigation system (for aquaponic farming

It is an object of the present invention to provide an apparatus and method that goes at least some way toward overcoming the above problem and/or that will provide the public and/or industry with a useful alternative.

According to the invention, there is provided an apparatus for generating and delivering microbubbles and nanobubbles of hydrogen gas, oxygen gas and oxyhydrogen gas in water comprising:
an inlet for receiving a flow of water from a water reservoir or water supply and a water outlet for delivering water out of the apparatus,
an electrolysis assembly comprising electrodes operable to generate microbubbles and nanobubbles of hydrogen gas, oxygen gas and oxyhydrogen gas on surfaces thereof from water received at the inlet,
**characterised in that** the electrodes are disposed within an electrode housing such that water received at the inlet flows over the electrodes to displace the microbubbles and nanobubbles into the water flow, and the electrodes are arranged such that the direction of flow of water from the inlet and across surfaces of the electrodes within the electrode housing to the outlet is substantially planar.

According to the invention, water flows through and along surfaces of the electrodes to liberate the microbubbles and nanobubbles of hydrogen gas, oxygen gas and oxyhydrogen gas formed from the electrodes and out of the apparatus. The provision of an electrode housing ensures that the electrodes are packed relatively densely together in the housing so that water flowing through the housing is forced to flow between and over the surfaces of the electrodes. This means that a more efficient apparatus is provided as water flow is directed between the electrodes thus breaking off more gas bubbles at the desired smaller size to saturate water flow at the outlet with a higher concentration of microbubbles and nanobubbles of hydrogen gas, oxygen gas and oxyhydrogen gas.

The planar water flow ensures displacement and liberation of the bubbles occurs relatively quickly thereby preventing the microbubbles and nanobubbles of hydrogen gas, oxygen gas and oxyhydrogen gas from coalescing to a larger size, which would cause them to be eventually displaced from the electrodes and to float to the top of the bath water and burst. By moving water over, across and between the electrodes the contact time between the water and electrodes is reduced which avoids the formation of larger bubbles.

The benefit of the invention is in its ability to convert the water from a positive ORP value to a relatively high negative ORP value, depending on the volume flow of water or reservoir size and size configuration of the device and electrodes used to generate the nano and microbubbles. By generating nanobubbles that remain in the water longer a more efficient apparatus for generating water flow out of the apparatus with a lower ORP value is created.

Therefore, while the apparatus generates the same volume of gas at the electrodes the configuration of the apparatus facilitates the generation of more, and therefore smaller, microbubbles and nanobubbles. Moreover, ensuring that the water flowing through the electrolysis assembly is in contact with the electrodes provides a high concentration of microbubbles and nanobubbles in the water.

Preferably, the electrodes are provided as an electrode stack configured to perform electrolysis on the water, in which the electrode stack is arranged between the inlet and outlet of the apparatus and comprises a plurality of spaced apart electrode plates disposed such that the water flows between and over the electrode plates from the inlet to the outlet of the apparatus.

The top and bottom plates of the electrodes are also configured not to produce any gas and are located substantially against the housing walls to prevent, where possible, water flowing over them. The side edges of the electrodes are also tightly packed against the housing wall to further ensure that all water flowing through the housing is forced over the electrode surfaces.

Any number of electrode plates may be provided, including 2, 3, 4, 5 or more as required or as desired. References in the following to any specific number of electrode plates is given by way of example only and should not be seen as limiting.

Preferably, the electrode plates in the electrode stack are spaced between 0.5mm to 2mm apart.

Preferably, the electrode plates in the electrode stack are spaced between 1mm to 5mm apart.

Alternatively, electrode plates are spaced substantially 1mm, 2mm, 3mm, 4mm, 5mm or more apart.

Preferably, the electrodes are arranged so that the water flowing through the electrode stack is never more than a defined distance of between about 0.5mm to 2mm from an electrode as it flows through the electrode housing. This results in a greater volume of nanobubbles and sub 100micron microbubbles of hydrogen gas, oxygen gas and oxyhydrogen gas in the water thus increasing the concentration of hydrogen in the water as measured in parts per million (PPM) and its corresponding ORP value. As nanobubbles will remain in the water for extended periods of time, and often hours, this high concentration of hydrogen in the water also remains in the water for a long period of time, thus ensuring the negative ORP value remains relatively high.

It will be understood that when the distance between the electrode plates is 1mm, the water, as it flows through the electrode assembly will not be more than 0.5mm from an electrode surface, even on the outer edges of the electrodes or at the top or bottom plates.

The electrode plate surfaces extend in the direction of movement of water through the apparatus.

The electrode plates may be solid plate or mesh plates or solid plates with holes.

Preferably, one pair or more of the electrode plates are made from an inert material such as titanium, platinum or steel.

Alternatively, one pair or more of the electrode plates are made from stainless steel cell plates or are made from another metal. The electrode plates may also be coated with platinum, or coated with nickel or oxide of nickel or other metal oxide to improve performance.

Each electrode plate in the stack is a cathode or an anode and the plates are arranged in the stack to alternate in sequential order between being a cathode plate and an anode plate.

The cathode and anodes are connected by an arrangement of holes, pins and spacers. Alternate hole sizes are punched through the respective anode and cathode plates and a pin is inserted through the holes formed to connect the anodes together and the cathodes together. Thus, as an example, one 3.0mm pin connects cathode plates together yet does not make any connection with the anodes as its hole size is bigger at 5mm. The opposite then happens on the alternative side. A plastic spacer is used to keep the electrodes apart and a hole also extends through the spacers to allow the pin to connect the anodes on one side and cathodes on the other side

Preferably, the apparatus comprises an outer housing having an inlet and an outlet.

Preferably, water entry and exit apertures are provided between the electrode plates to direct the flow of water across surfaces of the electrode plates and through the electrolysis assembly. The water entry and exit apertures are provided at ends of the electrode plates.

Preferably, the apparatus further comprises water pump means connected to the electrolysis assembly by a pump outlet coupling operable draw water into the inlet and to direct water flow from an outlet of the pump to the water entry apertures between the electrodes.

Preferably, the pump means is an electrically powered water pump.

Alternatively, the water pump means is a gravity feed pump.

The water pump means may thus be external to the apparatus or fully contained within the housing. For example, pressure from a mains supply may act as an effective means for pumping water under pressure into and through the electrolysis assembly.

Preferably, the water reservoir is provided as a bath or a pool, such as a conventional domestic bath, a footbath, spa bath, plunge pool, swimming pool, spa bath with integrated jets or the like.

Preferably, the water pump means is located in the outer housing of the apparatus.

The electrolysis assembly, including the electrode housing may also be located in the outer housing of the apparatus.

The outer housing provides an inlet and outlet for water flow and is configured to be submersible in a water reservoir. Alternatively, the housing may be integrated or retrofitted to an existing bath, pool or other water appliance.

Preferably, the apparatus is powered by battery means. Alternatively, the apparatus comprises means for connection to a mains supply.

In another aspect the present there is provided a method for generating and delivering microbubbles and nanobubbles of hydrogen gas, oxygen gas and oxyhydrogen gas in water, the method comprising:
providing an inlet for receiving a flow of water from a water reservoir or water supply and a water outlet for delivering water out of the apparatus,
providing an electrolysis assembly comprising electrodes operable to generate gas bubbles comprising oxyhydrogen microbubbles and nanobubbles on surfaces thereof from water received at the inlet,
the method characterised by providing the electrolysis assembly with an electrode housing and disposing the electrodes within the electrode housing such that water received at the inlet flows over the electrodes to displace the gas bubbles into the water flow, and the electrodes are arranged such that the direction of flow of water from the inlet and across surfaces of the electrodes within the electrode housing to the outlet is substantially planar.

In another aspect the present invention relates to an apparatus for generating microbubbles and nanobubbles of hydrogen gas, oxygen gas and oxyhydrogen gas in a water reservoir, whereby the apparatus further comprises:
attachment means comprising an inlet connector and an outlet connector for connecting the apparatus to a side wall of the water reservoir,
the inlet and outlet connectors each extending through spaced apart apertures in the side wall of the water reservoir, and
whereby, water from the water reservoir is drawn into the inlet of the apparatus via the inlet connector and gas bubbles displaced from the electrodes into the water flow are directed from the outlet of the apparatus and into the water in the reservoir water through the outlet connector.

The water reservoir may be provided as a bath, footbath, spa bath, hot tub or swimming pool.

Preferably, the attachment means is configured for connecting the apparatus on an external surface of the side wall of the water reservoir provided as a bath or hot tub or other reservoir.

Preferably, the apparatus comprises drainage means operable to drain water remaining in the apparatus when the water reservoir is emptied, in which the drainage means is self-draining and water flows out of the apparatus under force of gravity.

In a further aspect the present invention comprises an apparatus for generating microbubbles and nanobubbles of hydrogen gas, oxygen gas and oxyhydrogen gas in water and a water reservoir.

In a further aspect the present invention relates to an apparatus for generating microbubbles and nanobubbles of hydrogen gas, oxygen gas and oxyhydrogen gas in water flow derived from a water shower, the apparatus further comprises:
attachment means comprising an inlet connector and an outlet connector for connecting the apparatus to the shower,
the inlet connector for connecting the inlet of the apparatus to a water inlet of the shower or an outlet of a heated water reservoir of the shower,
the outlet connector for connecting the outlet of the apparatus to an end of the shower hose or other outlet of the shower.

The shower may be a standard shower, a shower fitted in a bathtub, an electric shower or a power shower operable to heat water using a heated water reservoir provided between a mains water inlet and an outlet of the shower.

In a further aspect the present invention relates to an apparatus for generating microbubbles and nanobubbles of hydrogen gas, oxygen gas and oxyhydrogen gas in a domestic potable drinking water tap or outlet supply, the apparatus further comprising:
attachment means comprising an inlet connector and an outlet connector for connecting the apparatus to the water tap or outlet supply,
the inlet connector for connecting the inlet of the apparatus to a water inlet of the domestic potable drinking water supply,
the outlet connector for connecting the outlet of the apparatus to a water outlet pipe,
whereby, water from the water inlet of the domestic potable drinking water supply is drawn into the inlet of the apparatus via the inlet connector and gas bubbles, comprising microbubbles and nanobubbles, displaced from the electrodes into the water flow are directed from the outlet of the apparatus and into the water flow via the water outlet pipe to an outlet tap.

The present invention may also be adapted for application to supply microbubbles and nanobubbles of hydrogen gas, oxygen gas and oxyhydrogen gas in water in other systems, including, but not limited to water drinking water, (animals and humans), aquaponic farming, water Irrigation systems and waste-water treatment.

Further aspects of the present invention will become apparent form the ensuing description which is given by way of example only.

The invention will be more clearly understood from the following description of some embodiments thereof, given by way of example only, with reference to the accompanying drawings, in which:
Figure 1 is a perspective view of an apparatus configured according to the invention shown in a bathtub,
Figure 2 is an end view of the apparatus of Figure 1 in the bathtub,
Figure 3 is top view of the apparatus of Figure 1 positioned on a side internal surface of the bathtub,
Figure 4 is an exploded perspective view of Figure 1,
Figure 5 is a sectional view from an end of the apparatus shown in Figure 1,
Figure 6 is a sectional view from a side of the apparatus shown in Figure 1,
Figure 7 is a further sectional view from a side of the apparatus shown in Figure 1 without the outer housing,
Figure 8 is a sectional view from above of the apparatus shown in Figure 1 without the outer housing,
Figure 9 is an exploded perspective view of the apparatus of Figure 1 adapted to be powered by battery means,
Figure 10 is a exploded view showing the way in which electrode plates of the electrolysis assembly are interconnected according to the invention,
Figure 11 is a front perspective view of the apparatus of Figure 9,
Figure 12 is a side cutaway diagrammatic showing the arrangement of batteries in the embodiment of Figure 9,
Figure 13 is a sectional view of the apparatus of Figure 9
Figures 14 to 16 are perspective exterior views showing of the apparatus of Figure 9,
Figure 17 is a perspective view of the apparatus of Figure 9 shown in a bathtub,
Figure 18 is a perspective view showing an embodiment of the apparatus according to the invention fitted to or built into a wall surface of a bathtub,
Figures 19 and 20 are exploded views of the apparatus shown in Figure 18,
Figure 21 is a side sectional view of the inlet connection of the apparatus shown in Figure 18,

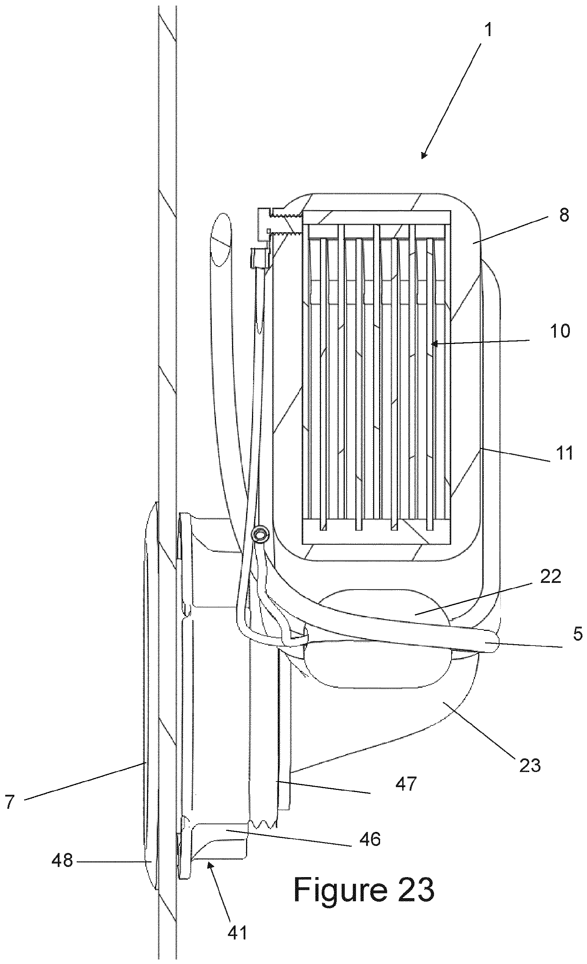

Figures 22 and 23 are side sectional views of the outlet connection of the apparatus shown in Figure 18,
Figure 24 is a perspective view showing an embodiment of the apparatus according to the invention fitted in a shower system,
Figure 25 and 26 are exploded views of the apparatus and shower system shown in Figure 24,
Figure 27 is a cutaway view of Figure 24 showing the apparatus installed in a shower system,
Figure 28 is a perspective view showing an embodiment of the apparatus according to the invention fitted in an electric shower system,
Figure 29 is a sectional view of the apparatus of the present invention incorporated for use in a drinking water system, and
Figure 30 is a stylised schematic of a handset for measuring the oxidation reduction potential (ORP) of water and remotely turning on and off the apparatus 1 when in use, such as in a bath.

The present invention relates an apparatus for generating and delivering microbubbles and nanobubbles of hydrogen gas, oxygen gas and oxyhydrogen gas in water. Although reference in the following will be made to the apparatus being implemented to deliver microbubbles and nanobubbles in a bathtub containing bath water, in shower arrangements, and in drinking water this should in no way be seen as limiting. For example, the invention has utility in a variety of other applications including, but not limited to H₂ drinking water system (animals and humans), aquaponic farming, water Irrigation systems, wastewater treatment and many more.

It will also be understood that nanobubbles have diameters of less than about 1 micron/micrometre in size and microbubbles have diameters of less than about 100 microns (µm, micrometres).

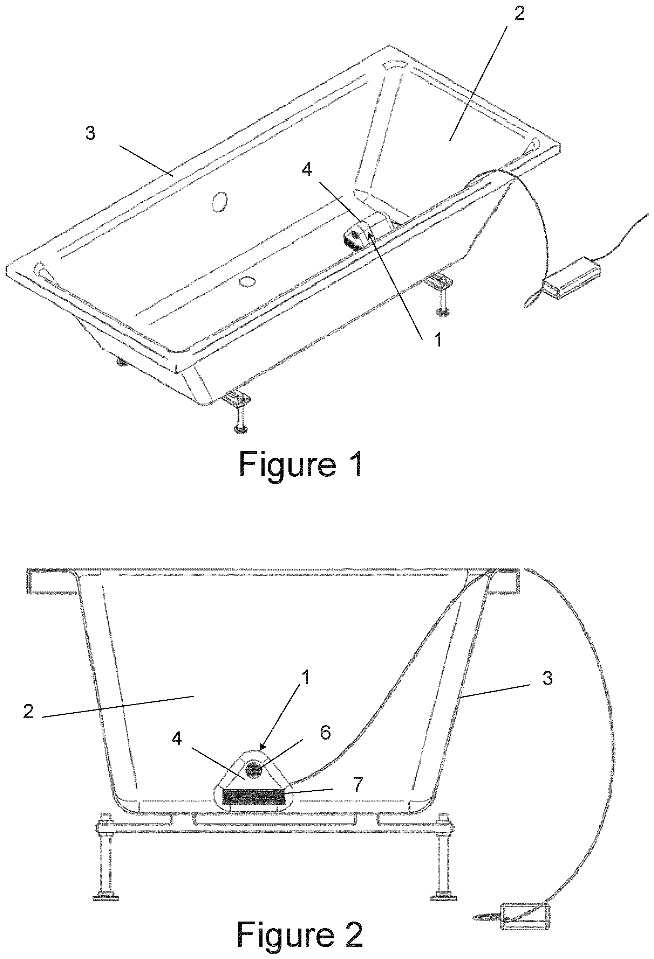

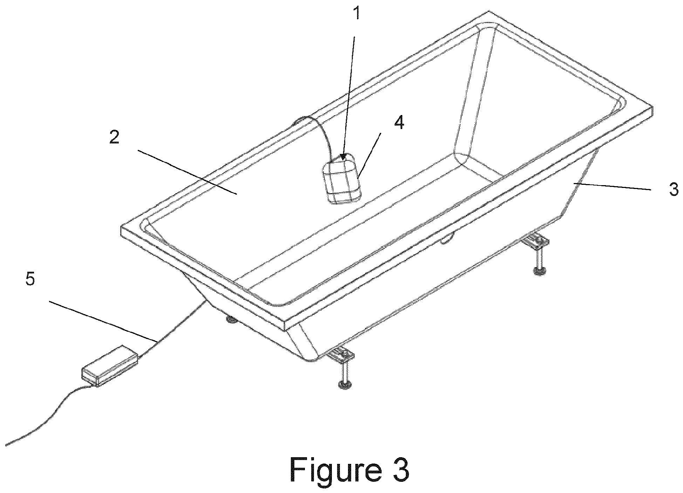

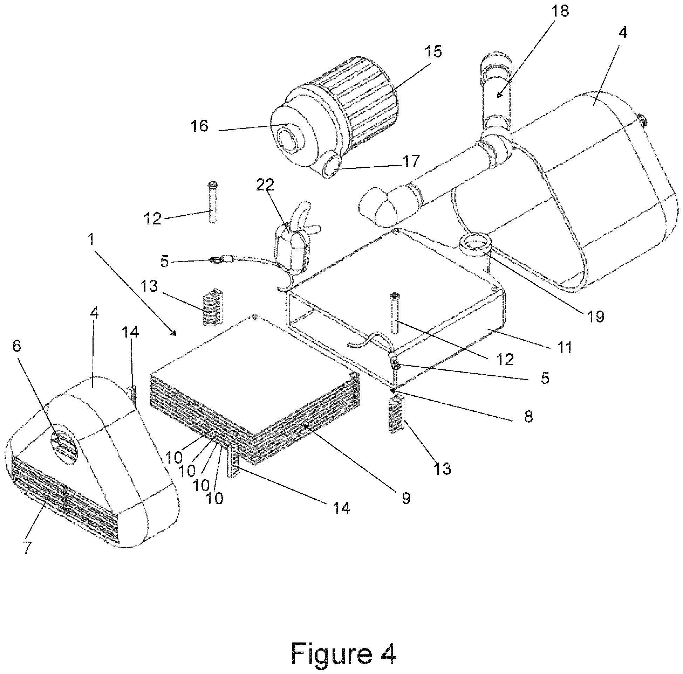

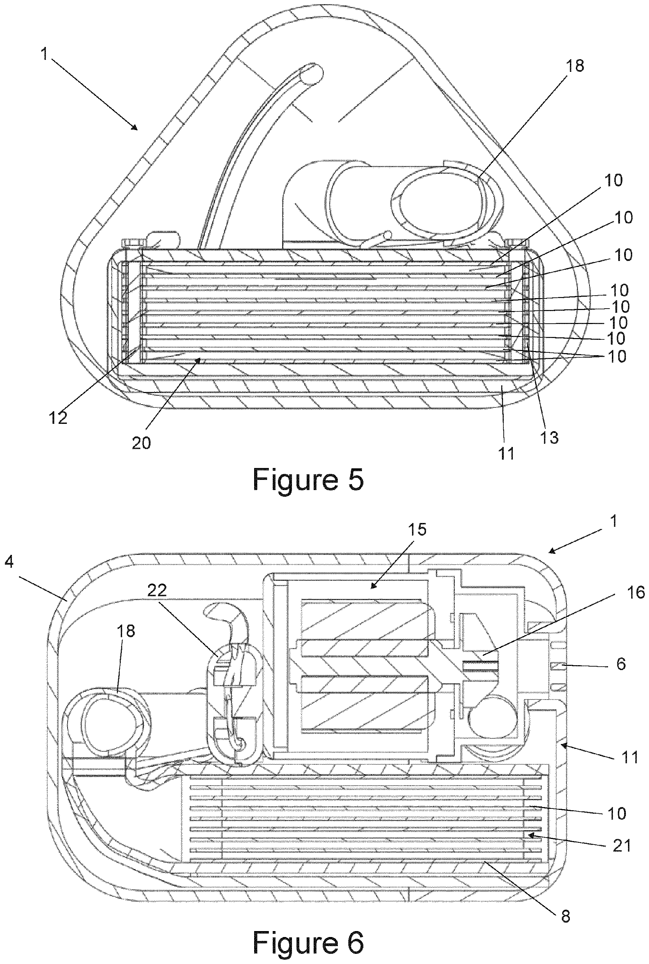

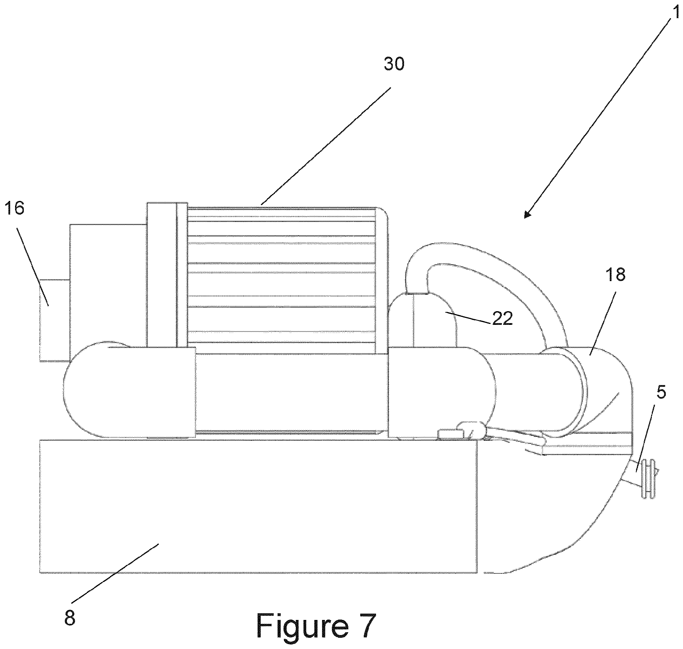

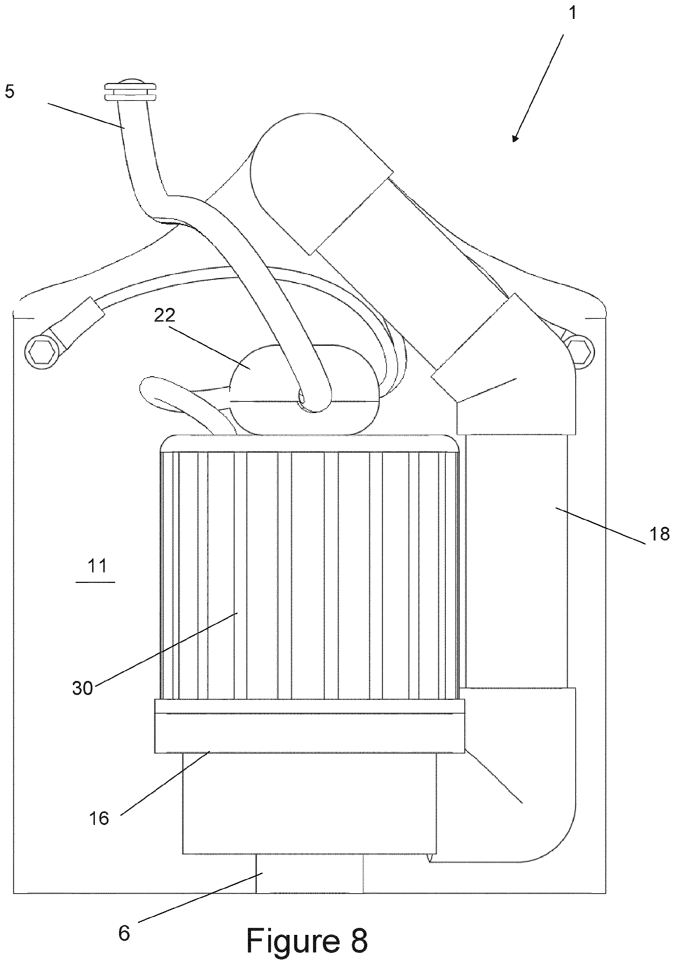

Referring to the drawings, and initially to Figures 1 to 8, there is shown an apparatus, indicated generally by the reference numeral 1, for generating and delivering microbubbles and nanobubbles of hydrogen gas, oxygen gas and oxyhydrogen gas in water, which in the instance shown, is a reservoir of water, indicated generally by the reference numeral 2, provided as bath water contained in a bathtub 3.

However, although the water reservoir 2 is shown as a bathtub containing bath water it will be understood that this is by way of example only and that such a reservoir may be provided as water in a footbath, spa bath, plunge pool, swimming pool, spa bath with integrated jets or the like and that reference to a bathtub should not be seen as limiting. The apparatus 1 shown is contained in a housing 4 configured to be submersible in the bath water 2 and in the embodiment shown is powered by connection to a power supply via power cable 5 coupled between the apparatus 1 and a mains supply.

The apparatus 1 comprises an inlet 6 for receiving a flow of water from the water reservoir or water supply 2 and an outlet 7 for delivering water comprising the microbubbles and nanobubbles of hydrogen gas, oxygen gas and oxyhydrogen gas into the bath water 2. An electrolysis assembly, indicated generally by the reference numeral 8, is provided in the apparatus 1, and comprises electrodes, indicated generally by the reference numeral 9, in an electrode housing 11 operable to generate the gas bubbles comprising microbubbles and nanobubbles of hydrogen gas, oxygen gas and oxyhydrogen gas on surfaces thereof from water 2 received via the inlet 6.

In the instance shown, the electrodes 9 are provided as an electrode stack configured to perform electrolysis on the water 2. The electrode stack comprises a plurality of spaced apart electrode plates 10 disposed such that the water flows between and over surfaces of the electrode plates 10 from the inlet 6 to the outlet 7 of the apparatus 1. The electrode plates 10 may optimally be spaced about 1mm apart although it will be understood that this range is given by way of example only and that alternative spacings between the electrode plates are possible. The electrode plates 10 are thus arranged in the electrolysis assembly 8 so that the water flowing through the electrode stack is never more than a defined distance from an electrode 9 as it flows through the electrode housing 11.

The electrodes 10 are disposed within the electrode housing 11 such that water received at the inlet 6 flows over the electrodes 10 to displace the microbubbles and nanobubbles of hydrogen gas, oxygen gas and oxyhydrogen gas into the water flow. The electrodes 10 are arranged such that the direction of flow of water from the inlet 6 and across surfaces of the electrodes 10 within the electrode housing 11 to the outlet 7 and out of the apparatus 1 is substantially planar.

The electrode plates 10 are platinum optionally coated titanium plates and each electrode plate 10 in the stack is a cathode or an anode and the plates 10 are arranged in the stack to alternate in sequential order between being a cathode plate 10 and an anode plate 10.

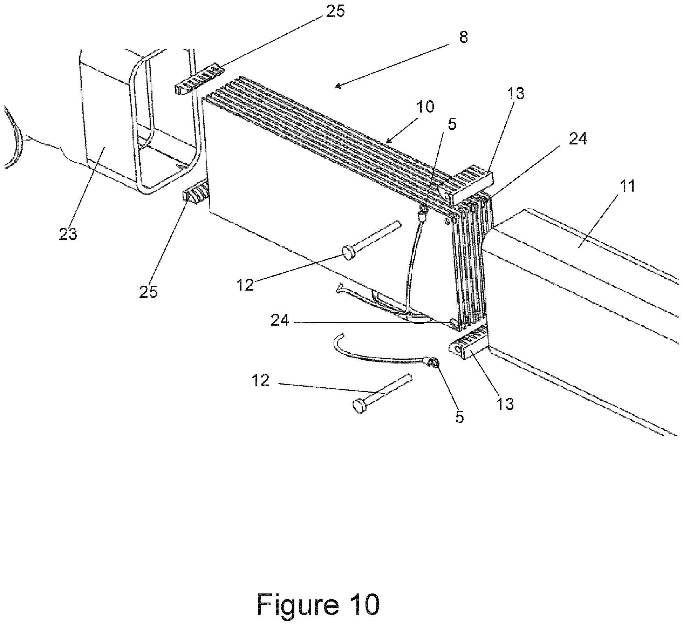

As shown in Figure 10, the cathode and anodes plates 10 are connected by an arrangement of holes, pins and spacers. In the instance shown alternate hole sizes are punched through the respective anode and cathode plates 10 and a corresponding channel 24 of the same size is formed in a spacer 25. A pin 26 is inserted through the holes formed in the plates 10 and spacer 25 to connect the anode plates together within a first spacer 25 and the cathode plates together with a second spacer 25. Further spacers 25 may also be provided as required or as desired. Thus, as an example, one 3.0mm pin connects cathode plates together yet does not make any connection with the anodes as its hole size is bigger at 5mm. The opposite then happens on the alternative side. A plastic spacer is used to keep the electrodes apart and a hole also extends through the spacers to allow the pin to connect the anodes on one side and cathodes on the other side

Also shown is a water pump means 15 operable to draw water 2 into the apparatus 1 through the inlet 6 and to pump water 2 through the apparatus 1 to the outlet 7 for delivery into the bath water. The water pump means 15 is shown as an electrically powered pump, however it may in alternative embodiments be provided as gravity feed pump. The water pump 15 may be housed in the outer housing 4 of the apparatus 1,or provided adjacent to the electrolysis assembly 8 depending on the application. In the instance shown, and by way of example only, the pump means 15 is a 24V water pump operable to pump approximately between 2 to 20 litres of water per minute through the apparatus 1 at a pump speed of about 2,400 revolutions per minute. It will however be understood that the configuration for a pump may be adapted as required to pump any volume of water, such as 50 litres or more water per minute through the apparatus 1.

A junction cable box 22 houses all electrical cables used to power and control the operation of the pump 15.

The water pump means 15 comprises a pump inlet 16 through which water is drawn into the pump and a pump outlet 17 via which water is moved under pressure through the electrolysis assembly 8 and out of the outlet 7. The pump means 15 is connected to the electrolysis assembly 8 by a pump outlet coupling, indicated generally by the reference numeral 18, that connects to an electrode housing inlet 19 operable to direct water flow from the outlet 17 of the pump to water entry apertures between the electrode plates 10. The water entry and exit apertures are provided between the electrode plates 10 to direct the flow of water across surfaces of the electrode plates 10 and through the electrolysis assembly 8 to the electrode housing outlet 23. The water entry and exit apertures are provided at ends of the electrode plates 10.

The water pump means 15 may be arranged to draw water into the electrode housing 11 such that water received at the inlet 6 flows over the electrodes 10 to displace the microbubbles and nanobubbles of hydrogen gas, oxygen gas and oxyhydrogen gas formed at the electrodes 10 into the water flow and out of the outlet 7 of the apparatus 1 into the bath water 2. Furthermore, the inlet 6 and electrodes 10 are arranged such that the direction of flow of water through the inlet 6 and across the electrodes 10 and out of the outlet 7 of the apparatus 1 is substantially planar. The water flow through and along surfaces of the electrodes 10 liberates the microbubbles and nanobubbles of hydrogen gas, oxygen gas and oxyhydrogen gas formed from the electrodes 10 and out of the apparatus 1 relatively quickly thereby preventing them from coalescing to a larger size, which would cause them to be eventually displaced from the electrodes 10 and to float to the top of the bath water and burst. By pumping water under pressure across the electrodes 10 the contact time between the water 2 and electrodes 10 is reduced which avoids the formation of larger bubbles.

In a further embodiment of the present invention, the apparatus 1, rather than being powered by connection to a power supply, may alternatively or additionally, be powered by battery means.

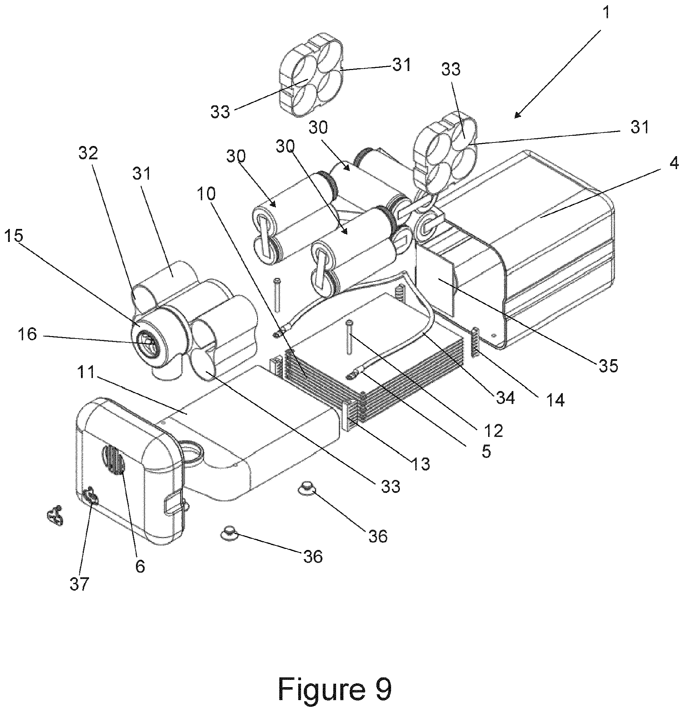

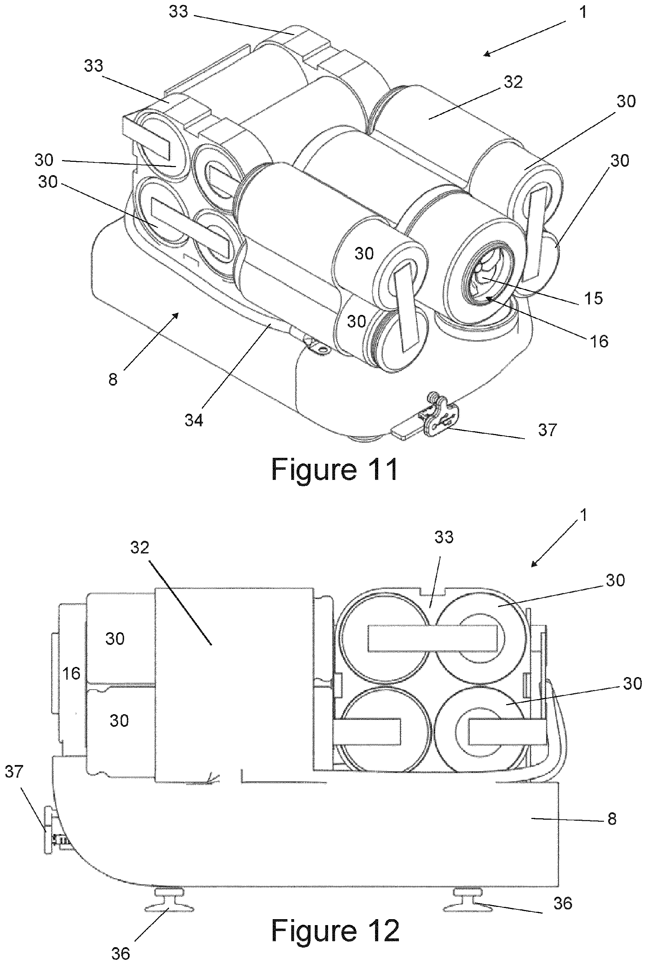

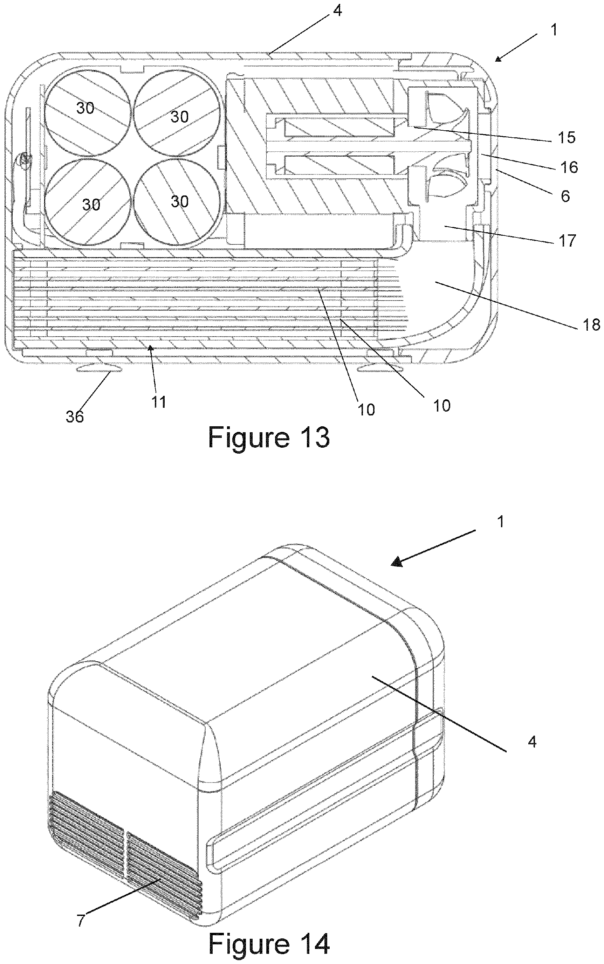

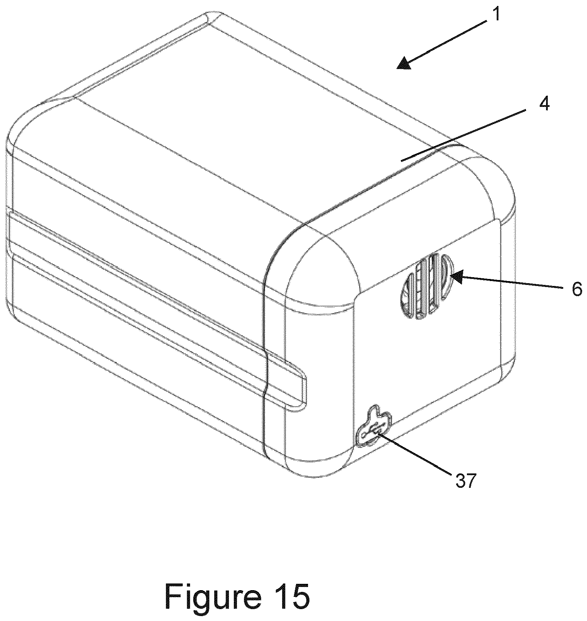

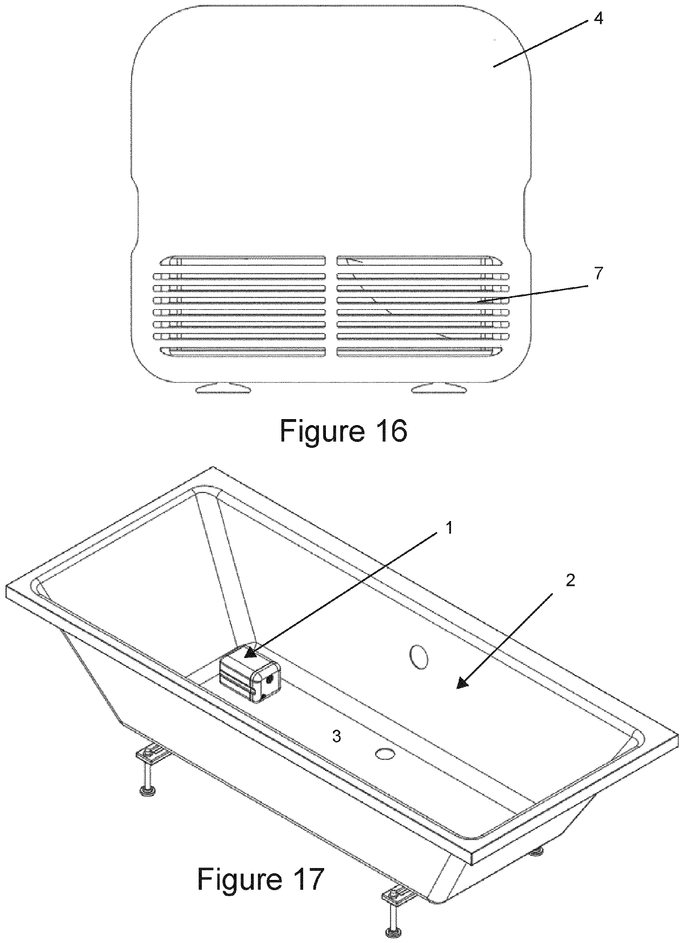

Accordingly, and with reference now to Figures 9 to 17, the apparatus 1 shown is adapted for battery powered operation. Reference numerals used in relation to like parts of the apparatus 1 shown in Figures 1 to 8 are also used in Figures 9 to 17.

As shown in this embodiment, the apparatus 1 further comprises an arrangement of batteries 30 that are seated in one or more battery holders 31 located within the housing 4. In the instance shown a battery holder 31 may be configured for placement adjacent to the pump means 15. The battery holder 31 may comprise one or more chambers 32 for holding the one or more batteries 30 in positions as required at or adjacent to the pump means 15 within the housing 4. Additional battery holders 31 comprising seats 33 are also provided. A battery PCB battery management subsystem 35 is coupled to via electrical cables 34 to the respective first and second metal strips 12, 13 connected to the electrode plates 10. Suction pads for securely fastening the apparatus 1 to a surface of the bath 3 are provided together with a charging port 37 for the batteries 31.

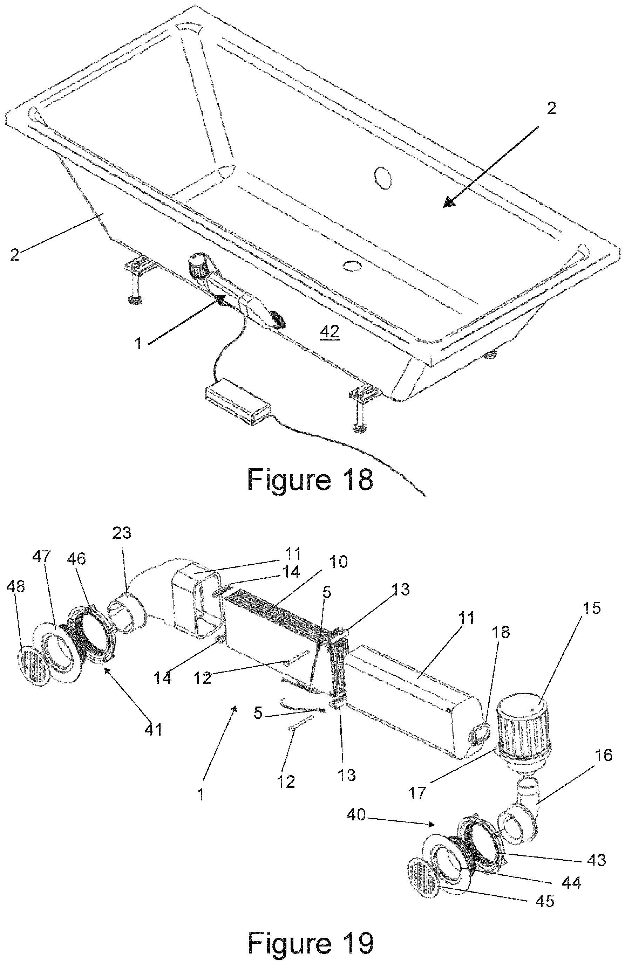

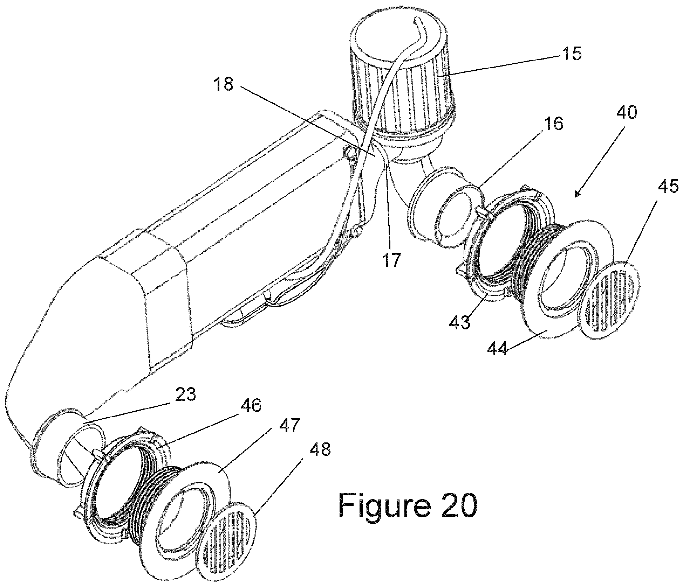

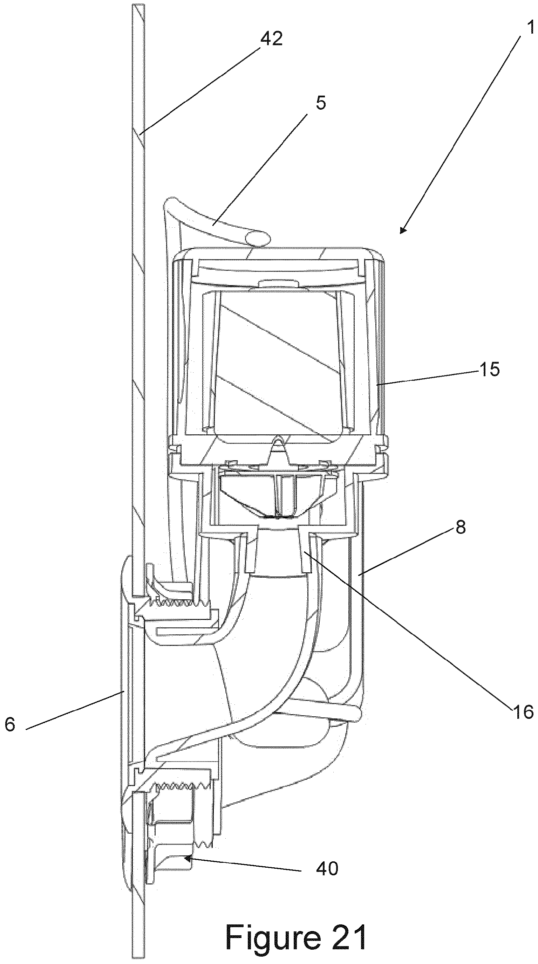

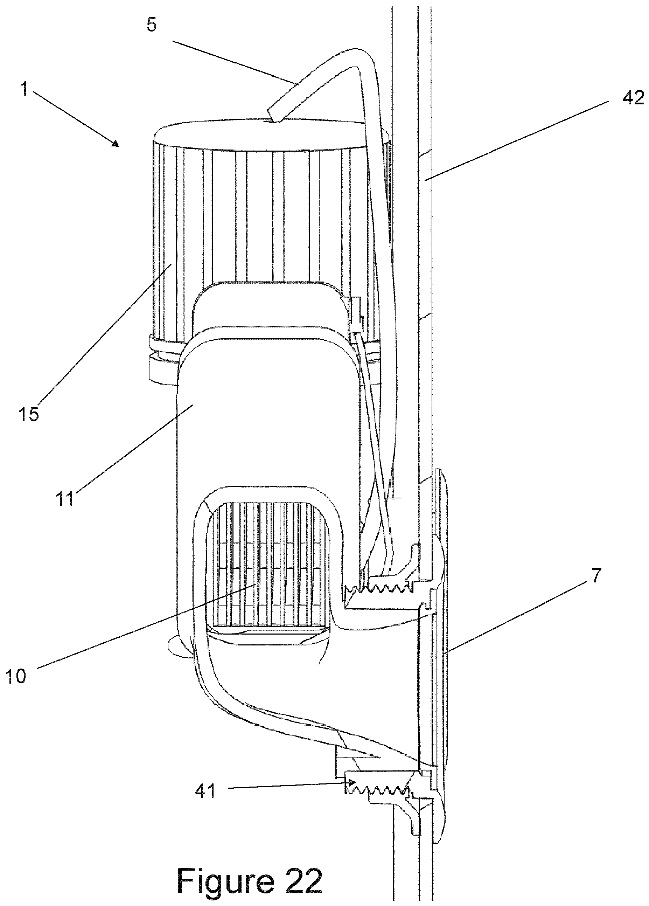

In a further embodiment, the apparatus 1 may be adapted for connection or retrofitting or being built into a side wall of a bathtub 3. Accordingly, and with reference now to Figures 18 to 22, the apparatus 1 is shown connected to the side wall of the bathtub 3. Reference numerals used in relation to like parts of the apparatus 1 shown in Figures 1 to 8 are also used in Figures 18 to 22.

In the embodiment shown, the apparatus 1 further comprises attachment means comprising an inlet connector, indicated generally by the reference numeral 40, and an outlet connector 41 for connecting the apparatus 1 to an external surface of side wall 42 of the water reservoir bathtub 2 filled with water. The inlet and outlet connectors 40, 41 each extend through spaced apart apertures in the side wall 42 of the bathtub 2 such that water from the bathtub is drawn into the inlet 6 of the apparatus 1 via the inlet connector 40 and microbubbles and nanobubbles of hydrogen gas, oxygen gas and oxyhydrogen gas displaced from the electrodes 10 into the water flow through the apparatus 1 are directed from the outlet 7 of the apparatus 1 and into the water in the reservoir water through the outlet connector 42.

The inlet connector 40 comprises a locking plate 44, locking nut 43 and grille plate 45 which are operable to connect with the fluid coupling 18 of the apparatus 1 via the aperture formed in the bathtub wall 42 to securely couple the inlet 6 of the apparatus 1 to the bathtub 3. In this way bath water flows into the apparatus 1 via the inlet connector 40 through the inlet 6. The outlet connector 41 also comprises a locking plate 47, locking nut 46 and grille plate 48 which connect to the electrode housing outlet 23 to secure the outlet 7 of the apparatus 1 to the bathtub wall 42 so that microbubbles and nanobubbles of hydrogen gas, oxygen gas and oxyhydrogen gas formed at the electrodes 10 may move out of apparatus 1 via the outlet connector 41 and into the bathwater contained in the bathtub 3.

The apparatus 1 shown comprises drainage means operable to allow water remaining in the apparatus 1 to drain when the water reservoir is emptied. In the instance shown the drainage means is self-draining and water may flow out of the apparatus 1 under force of gravity.

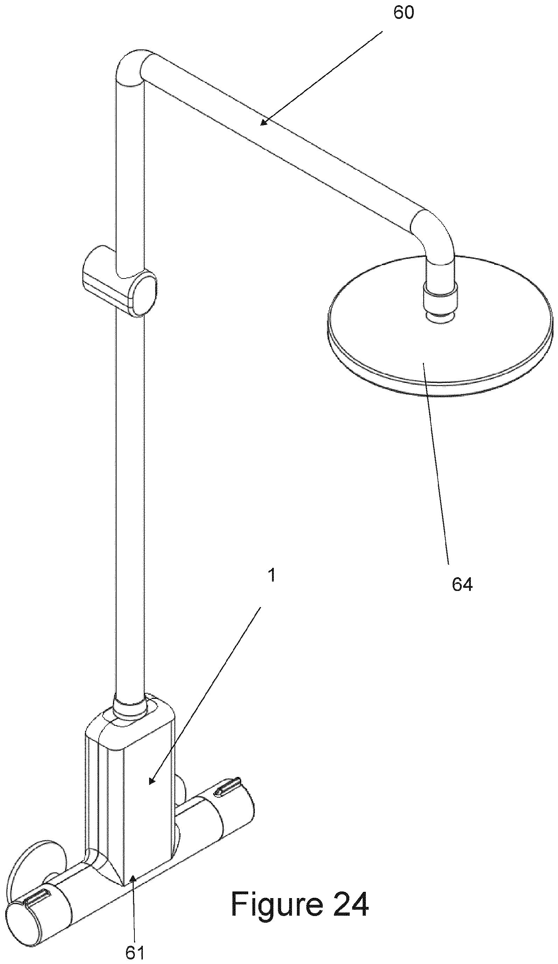

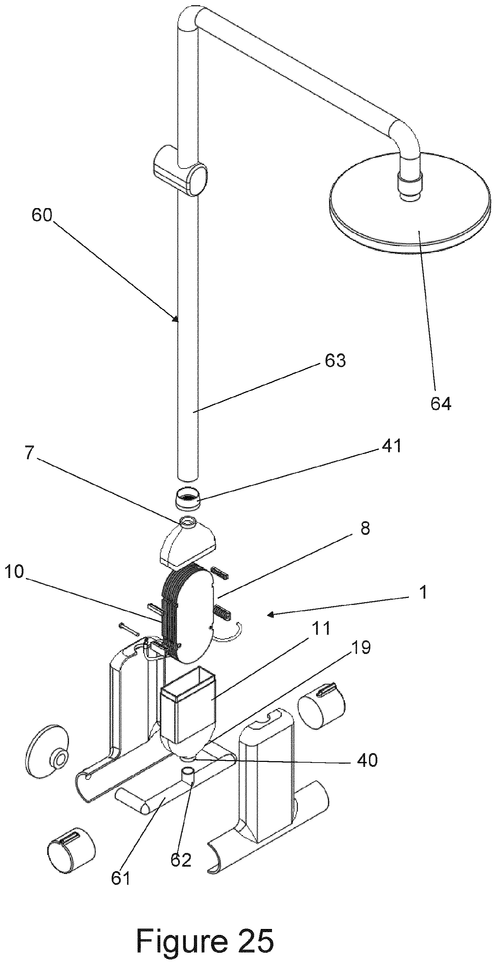

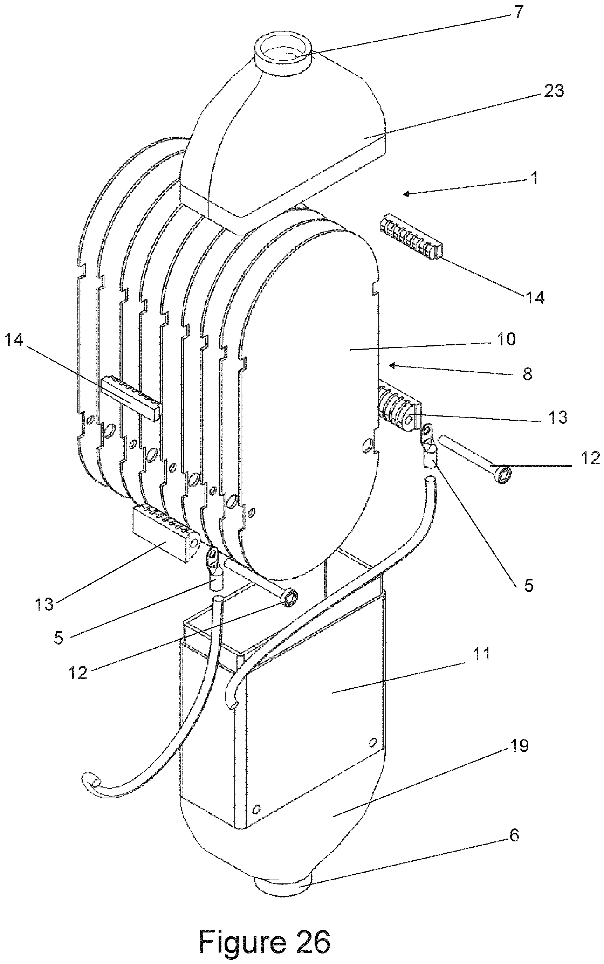

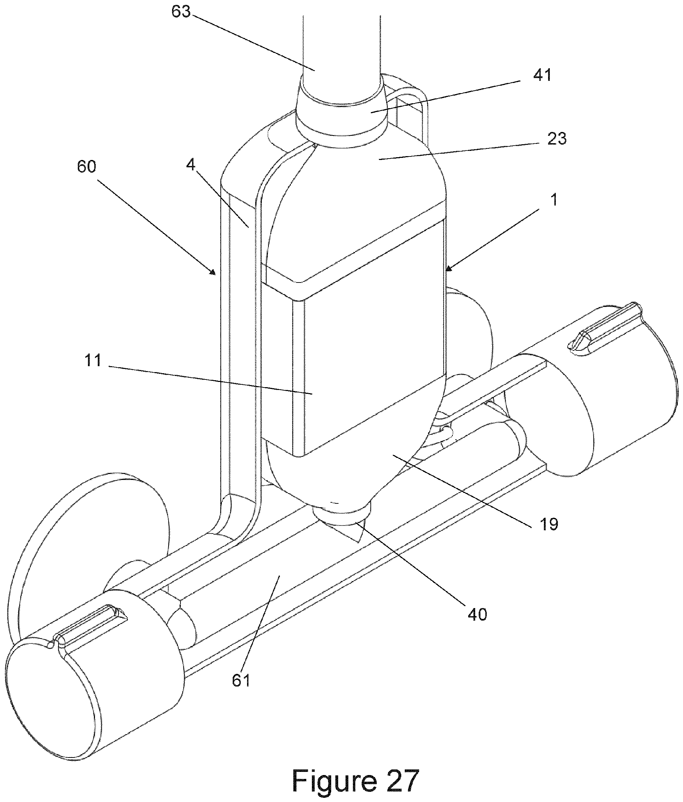

In a further embodiment, the apparatus 1 may be adapted for connection or placement in a shower unit. The shower may be a standard shower, a shower fitted in a bathtub, an electric shower or a power shower operable to heat water using a heated water reservoir provided between a mains water inlet and an outlet of the shower. Accordingly, and with reference now to Figures 24 to 28, the apparatus 1 is shown connected to the side wall of the bathtub 3. Reference numerals used in relation to like parts of the apparatus 1 shown in Figures 1 to 8 are also used in Figures 24 to 28.

Shown is a shower unit 60 in which the apparatus 1 has been installed to receive water from the shower water mixer 61 of the shower unit 1. That is, the apparatus 1 receives water directly after the hot and cold water received from the plumbed water supply has been mixed by the water mixer 61. In the embodiment shown the apparatus 1 further comprises attachment means comprising an inlet connector 40 and an outlet connector 41 for connecting the apparatus 1 to the shower 60. As shown, the inlet connector 40 is provided at the electrode housing inlet 19 and connects the inlet 6 of the apparatus 1 to the shower 60 via the mixer outlet 62. The outlet connector 41 connects the electrode housing outlet 23 to the main water outlet conduit or pipe 63 of the shower 60 leading to the shower head 64. Accordingly, water passes from the mains supply taps and through the shower mixer 61, through the inlet 6 of the apparatus and passes over the electrode plates 10 of the electrolysis assembly 8. Pressure from the mains water supply may act as a water pump means to pump water through the electrolysis assembly 8 to liberate and displace the nanobubbles and microbubbles of hydrogen gas, oxygen gas and oxyhydrogen gas formed at the electrodes 10 into the water flow and out of the outlet 7 of the apparatus 1 via the outlet connector 41 as shower water.

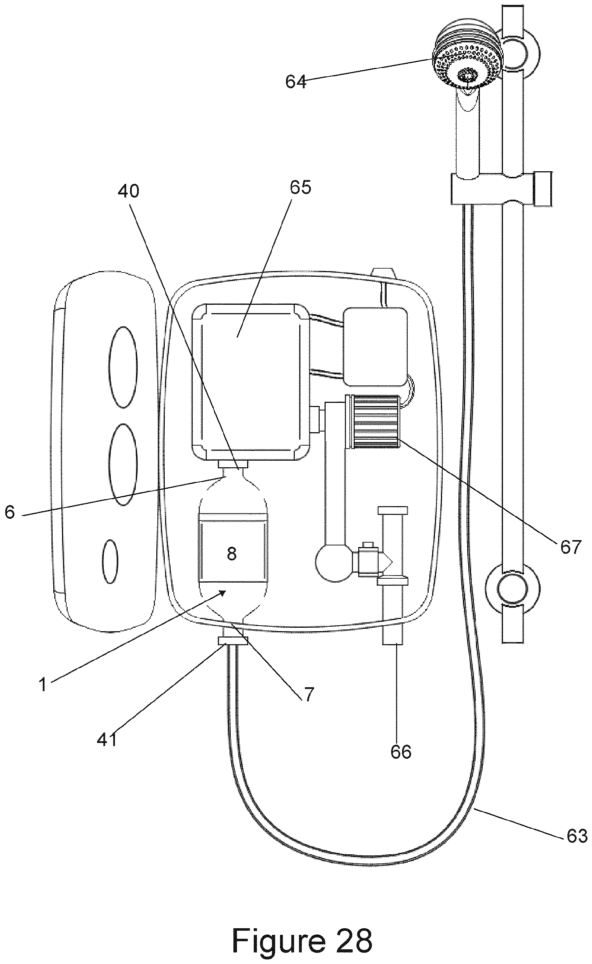

As shown in Figure 28, the shower 60 may be an electric shower comprising a heating element 65 through which mains water passes from a mains water inlet 66 and is pumped by pumping means 67 through the apparatus 1 to the outlet pipe 63 and out of the shower head 64. The inlet connector 40 couples the inlet 6 of the apparatus 1 to the heating element 65, and outlet connector 41 connects the water outlet pipe 63 to the outlet 7 of the apparatus 1 such that water pressure from the water pump means 67 pumps water through the electrolysis assembly 8 to liberate and displace the nanobubbles and microbubbles of hydrogen gas, oxygen gas and oxyhydrogen gas formed at the electrodes 10 into the water flow which moves out of the outlet 7 of the apparatus 1 to the shower head 64 as shower water containing the nanobubbles and microbubbles of hydrogen gas, oxygen gas and oxyhydrogen gas.

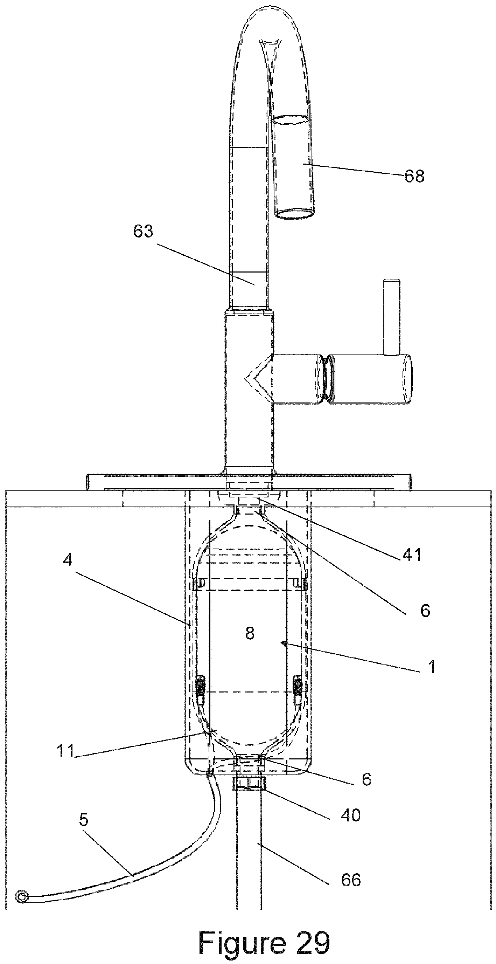

Figure 29 is an arrangement by which the apparatus 1 is connected in a domestic water tap to provide drinking water. In the embodiment shown, the inlet 6 of the apparatus 1 is connected via inlet connector 40 to a water supply inlet pipe 66. The outlet 7 of the apparatus 1 is connected via outlet connector 41 such that pressure from the water supply effectively displaces the nanobubbles and microbubbles of hydrogen gas, oxygen gas and oxyhydrogen gas formed at the electrodes 10 of the electrolysis assembly 8 and into the water flow which moves out of the outlet 7 of the apparatus 1 to the drinking water dispense head or tap 68.

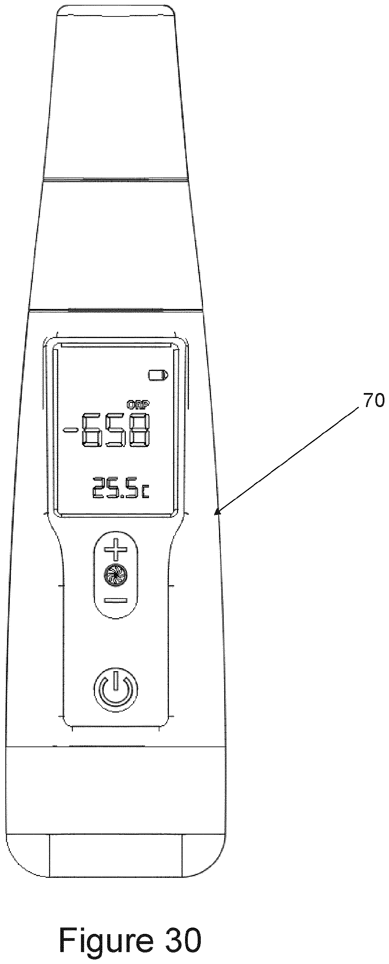

The present invention has been tested and, with the use of the handheld ORP sensor device as shown in Figure 30 and indicated generally by the reference numeral 70, the results are summarised as follows.

The test apparatus included an electrolysis assembly consisting of 9 x platinum coated metal plates with a surface area of 100sqcm stacked. (Plates were 10 x 10 cm or could be 15.87 cm x 6.3cm). Both sides of the electrodes are operational so the total area per electrode is 2 x 100 sq. cm square centimetres (200 sq. cm). The total area of the electrodes is 9 x 200 = 1,800 sq. cm. However, the two outer plates do not work so we reduce the total area by 2x 100 = 200 sq. cm. (2 x 100sq. cm), 1,800-200 = 1,600 sq. cm.

Applying a current of 0.0058 across the electrodes giving a total amp requirement of 9.21 Amps.

The electrodes are situated 2mm apart - this is the gap between the electrodes.

Hot water: 45°C; Electrolyser: 7 plates, 10x10cm

Starting ORP -20mV (because the water was aerated during the filling from the boiler, and this was an electrical boiler, the original in our site ORP of +220mV, went down to -20mV).

Pump: 24V; Vessel: -40Liters
Power supply: MeanWell: MW HLG-320H-24A (fixed current at 13A DC) 11.3V DC, 13A DC

ORP levels measured with the device 70:
After 1 minute: - 405mV; After 5 minutes: - 420mV; After 10 minutes: -440mV.
One hour after the process (10 minutes) is stopped, the ORP is -427mV to - 434mV

The starting ORP levels of hot water are depending on how water is heated: electrical, gas, or central heating. This factor can change the starting parameters of the hot water. In addition, there is a difference in the levels of hot water ORP and cold water ORP. Doing tests with hot water from Gas Boiler to compare the value. With such power supply, we see that the ORP is changing to -400mV in one minute.

The test duration was 10 minutes. After one hour after the test was done, the ORP was still - 430mV.

Aspects of the present invention have been described by way of example only and it should be appreciated that additions and/or modifications may be made thereto without departing from the scope thereof as defined in the appended claims.

## Claims

1. An apparatus for generating and delivering microbubbles and nanobubbles of hydrogen gas, oxygen gas and oxyhydrogen gas in water comprising:
an inlet for receiving a flow of water from a water reservoir or water supply and a water outlet for delivering water out of the apparatus,
an electrolysis assembly disposed in the apparatus, the electrolysis assembly comprising electrodes operable to generate microbubbles and nanobubbles of hydrogen gas, oxygen gas and oxyhydrogen gas on surfaces thereof from water received at the inlet, and
**characterised in that** the electrodes are disposed in the electrolysis assembly within an electrode housing such that water received at the inlet flows over the electrodes to displace the microbubbles and nanobubbles into the water flow, and the electrodes are arranged such that the direction of flow of water from the inlet and across surfaces of the electrodes within the electrode housing to the outlet is substantially planar.

2. The apparatus as claimed in Claim 1, in which the electrodes are provided as an electrode stack configured to perform electrolysis on the water, in which the electrode stack is arranged between the inlet and outlet of the apparatus and comprises a plurality of spaced apart electrode plates disposed such that the water flows between and over the electrode plates from the inlet to the outlet of the apparatus.

3. The apparatus as claimed in Claim 2, in which the electrode plates in the electrode stack are spaced between about 0.5mm to 2mm apart.

4. The apparatus as claimed in any one of the preceding claims, in which the water flow at the outlet has a negative oxidative reduction potential (ORP).

5. The apparatus as claimed in one of Claims 2 to 4, in which the distance between the electrode plates is 1mm, and molecules of water flowing through the electrode housing are not more than 0.5mm from an electrode plate, including at outer edges of the electrode plates and inactive outer sides of top and bottom plates in the electrode stack.

6. The apparatus as claimed in any one of Claims 2 to 5, in which water entry and exit apertures are provided at ends of the electrode plates to direct the flow of water across surfaces of the electrode plates and through the electrode housing.

7. The apparatus as claimed in any one of the preceding claims, further comprising water pump means operable to draw water into the inlet and pump water through the electrode housing to the outlet.

8. The apparatus as claimed in any of the preceding claims, further comprising an outer housing, whereby water pump means is coupled with the electrolysis assembly in the outer housing.

9. The apparatus as claimed in any of the preceding claims, further comprising battery power means.

10. The apparatus as claimed in any of the preceding claims, further comprising means for connection to a mains power supply.

11. The apparatus as claimed in any one of the preceding claims configured for attachment to a wall of a water reservoir, such as a bathtub, whereby the apparatus further comprises:
attachment means comprising an inlet connector and an outlet connector for connecting the apparatus to a side wall of the water reservoir,
the inlet and outlet connectors each extending through spaced apart apertures in the side wall of the water reservoir, and
whereby, water from the water reservoir is drawn into the inlet of the apparatus via the inlet connector and microbubbles and nanobubbles of hydrogen gas, oxygen gas and oxyhydrogen gas displaced from the electrodes into the water flow are directed from the outlet of the apparatus and into the water in the reservoir water through the outlet connector.

12. The apparatus as claimed in Claim 11, further comprising drainage means operable to drain water remaining in the apparatus when the water reservoir is emptied, in which the drainage means is self-draining, and water flows out of the apparatus under force of gravity.

13. The apparatus as claimed in any one of Claim 1 to 10 configured for attachment to a water shower, the apparatus further comprising:
attachment means comprising an inlet connector and an outlet connector for connecting the apparatus to the shower,
the inlet connector for connecting the inlet of the apparatus to a water inlet of the shower or an outlet of a heated water reservoir of the shower,
the outlet connector for connecting the outlet of the apparatus to an end of the shower hose or other outlet of the shower,
whereby, water from the water inlet of the shower is drawn into the inlet of the apparatus via the inlet connector and microbubbles and nanobubbles of hydrogen gas, oxygen gas and oxyhydrogen gas displaced from the electrodes into the water flow are directed from the outlet of the apparatus and into the water flow from the shower through the outlet connector.

14. The apparatus as claimed in any one of Claim 1 to 10 configured for attachment to a domestic potable drinking water tap or outlet supply, the apparatus further comprises:
attachment means comprising an inlet connector and an outlet connector for connecting the apparatus to the water tap or outlet supply,
the inlet connector for connecting the inlet of the apparatus to a water inlet of the domestic potable drinking water supply,
the outlet connector for connecting the outlet of the apparatus to a water outlet pipe,
whereby, water from the water inlet of the domestic potable drinking water supply is drawn into the inlet of the apparatus via the inlet connector and microbubbles and nanobubbles of hydrogen gas, oxygen gas and oxyhydrogen gas displaced from the electrodes into the water flow are directed from the outlet of the apparatus and into the water flow via the water outlet pipe to the water outlet tap.

15. A method for generating and delivering microbubbles and nanobubbles of hydrogen gas, oxygen gas and oxyhydrogen gas in water, the method comprising:
providing an inlet for receiving a flow of water from a water reservoir or water supply and a water outlet for delivering water out of the apparatus,
providing an electrolysis assembly comprising electrodes operable to generate microbubbles and nanobubbles of hydrogen gas, oxygen gas and oxyhydrogen gas on surfaces thereof from water received at the inlet,
the method **characterised by** providing the electrolysis assembly with an electrode housing and disposing the electrodes within the electrode housing such that water received at the inlet flows over the electrodes to displace the microbubbles and nanobubbles of hydrogen gas, oxygen gas and oxyhydrogen gas into the water flow, and the electrodes are arranged such that the direction of flow of water from the inlet and across surfaces of the electrodes within the electrode housing to the outlet is substantially planar.
